# EUROPÄISCHE PATENTSCHRIFT

(11) **EP 2 681 685 B1**
(45) Veröffentlichungstag und Bekanntmachung des Hinweises auf die Patenterteilung: **26.12.2018**
(21) Anmeldenummer: 11723403.9
(22) Anmeldetag: 19.05.2011
(51) Int. Cl.: G06F 21/14

(54) **VERFAHREN ZUM SCHÜTZEN EINER MEHRZAHL VON BAUSTEINEN EINES AUTOMATISIERUNGSSYSTEMS**
METHOD FOR PROTECTING A PLURALITY OF MODULES OF AN AUTOMATION SYSTEM
PROCÉDÉ DE PROTECTION D'UNE PLURALITÉ DE COMPOSANTS D'UN SYSTÈME D'AUTOMATISATION

(43) Veröffentlichungstag der Anmeldung: 08.01.2014
(73) Patentinhaber: Siemens Aktiengesellschaft, 80333 München (DE)
(72) Erfinder: KOHLER, Benjamin, 90419 Nürnberg (DE); RIEDL, Wolfgang, 90459 Nürnberg (DE); ROSENBERG, Jens, Ansgar, 90459 Nürnberg (DE); WITTIG, Sebastian, 90522 Oberasbach (DE)
(86) Internationale Anmeldenummer: PCT/EP2011/058172
(87) Internationale Veröffentlichungsnummer: WO 2012/155982

(56) Entgegenhaltungen:
- EP-A2- 1 770 590
- WO-A1-2007/035491
- US-A1- 2008 276 187
- US-B1- 6 760 842

## Beschreibung

Die vorliegende Erfindung betrifft ein Verfahren zum Schützen einer Mehrzahl von Bausteinen eines Automatisierungssystems vor einer Einsichtnahme. Überdies betrifft die vorliegende Erfindung ein solches Automatisierungssystem.

Bei heutigen Automatisierungssystemen bzw. Automatisierungsanlagen können die Bausteine des Automatisierungssystems mit einem entsprechenden Schutz, einem so genannten Know-how-Schutz versehen werden, mit dem diese Bausteine durch einen durch ein Passwort geschützten Schlüssel verschlüsselt werden. Ein solcher Schutz ist eine Funktion eines Engineeringsystems, mit dem das Automatisierungssystem erstellt wurde. Die Bausteine können ohne Kenntnis des Passworts nicht mehr geöffnet und ausgelesen werden. Solche Bausteine können entsprechende Daten- oder Pragrammbausteine von Komponenten eines Automatisierungssystems bzw. von Automatisierungsanlagen sein.

Während der Inhalt von den geschützten Bausteinen verborgen ist, bleiben die Schnittstellen bzw. Verwendungsstellen des Bausteins weiterhin ungeschützt sichtbar. Unter Schnittstelle ist insbesondere ein Bereich des Bausteins zu verstehen, in dem die Ein- und Ausgabeparameter des Bausteins deklariert werden. Unter Verwendungsstelle ist insbesondere ein Bereich des Bausteins zu verstehen, der einen Verweis auf einen anderen Baustein beinhaltet.

In den Fällen, in denen ein Baustein als eine Komponente gedacht ist, die z. B. von einem Kunden in dessen eigenen Automatisierungssystem eingesetzt werden soll, können diese Schnittstelle nicht geschützt werden, da der Kunde diese zur Programmierung benötigt. Oft möchte ein Hersteller eines Bausteins auch die Schnittstellen des Bausteins mit einem sprechenden Schutz versehen, da die Schnittstellen des Bausteins Rückschlüsse auf dessen interne Struktur und die technische Funktionsweise schließen lassen. Ein Beispiel hierfür wäre ein Ingenieurbüro, das sich auf eine bestimmte Technologie spezialisiert hat. Ein Kunde dieses Ingenieurbüros erstellt eine komplexe Automatisierungslösung und kauft bei dem Ingenieurbüro eine Teillösung für diese Technologie ein. Üblicherweise erstellen die Mitarbeiter des Ingenieurbüros die gewünschte Teillösung nicht von Grund auf neu, sondern benutzen dazu früher erstellte und erprobte Bausteine aus einer Technologie-Bibliothek, die die wichtigsten technologischen Funktionen beinhaltet. Hierbei werden lediglich aufgabenspezifische Bausteine neu erstellt, die vor allem die Anpassung an die konkrete Aufgabenstellung beinhalten. Die Bausteine aus der Technologie-Bibliothek enthalten damit einen zentralen Teil des technologischen Know-hows des Ingenieurbüros. Es ist daher in dessen Interesse, dass Außenstehende möglichst wenig Einblick in diesen Baustein gewinnen können.

Die Bausteine können mit einem entsprechenden Know-How-Schutz versehen werden. Dieser Schutz bezieht sich in diesem Fall nur auf den Programmtext der Bausteine, die Schnittstellen bzw. Verwendungsstellen selbst können aber nicht geschützt werden. Wenn neben den zu schützenden Bausteinen auch die Schnittstellen bzw. Verwendungsstellen dieser Bausteine geschützt werden sollen, so muss der Anwender zunächst diejenigen Bausteine identifizieren, in denen die zu schützenden Bausteine referenziert werden. Im Anschluss muss der Anwender diese Bausteine dann wiederum manuell mit einem entsprechenden Schutz versehen.

Die US 2008/0276187 A1 beschreibt ein Netzwerk aus Icons, innerhalb eines Computersystems, wobei Teile des Netzwerks von einem Benutzer deaktiviert werden können. Wenn ein erstes grafisches Objekt deaktiviert wird, ermittelt das Computersystem ein zweites grafisches Objekt, das von dem ersten grafischen Objekt abhängig ist, und deaktiviert dieses.

Des Weiteren beschreibt die WO 2007/035491 A1 eine grafische Modellierungsumgebung, bei der einzelne Elemente gesperrt sind und nur durch eine entsprechende Autorisierung freigegeben werden können.

Die US 6,760,842 B1 beschreibt ein Verfahren zum Aufbauen eines Programms aus Funktionseinheiten innerhalb einer grafischen Umgebung. Dabei können die Funktionseinheiten gesperrt werden, sodass ein Benutzer geheime Informationen, wie die Funktionseinheiten ihre Tasks abarbeiten, nicht einsehen kann.

Aus der EP 1 770 590 A1 ist ein Verfahren zum Schützen von Quellcode bekannt. Dabei wird verwalteter Quellcode, der zu schützten ist, in ein Modul abgelenkt, in dem nativer Code für den Quellcode erstellt wird.

Die Aufgabe der vorliegenden Erfindung ist es, Bausteine eines Automatisierungssystems besonders einfach und effektiv zu schützen.

Diese Aufgabe wird erfindungsgemäß gelöst durch ein Verfahren zum Schützen einer Mehrzahl von Bausteinen eines Automatisierungssystems vor einer Einsichtnahme von einem Benutzer durch
- Auswählen eines ersten der Bausteine,
- Automatisches Bestimmen zumindest eines zweiten Bausteins, der einen Datenaustausch mit dem ersten Baustein durchführt, und
- Schützen des ersten und des zumindest einen zweiten Bausteins mit einer Schutzeinrichtung des Automatisierungssystems, sodass nicht alle Daten des ersten Bausteins und des zweiten Bausteins einsehbar sind, wobei
- alle Daten des ersten Bausteins vor der Einsichtnahme geschützt werden und bei dem zumindest einen zweiten Baustein diejenigen Daten vor einer Einsichtnahme geschützt werden, die einen Datenaustausch mit dem ersten Baustein betreffen.

Das erfindungsgemäße Verfahren stellt einen erweiterten Schutz für die Bausteine eines Automatisierungssystems bzw. einer Automatisierungsanlage gegenüber einer Einsichtnahme dar. Hierbei wird gemäß einer speziellen Ausgestaltung zunächst derjenige Baustein des Automatisierungssystems ausgewählt, der geschützt werden soll. Im Anschluss werden diejenigen Bausteine automatisch identifiziert, die einen Datenaustausch mit dem zu schützenden Baustein durchführen. Es werden also diejenigen Bausteine bestimmt, die eine funktionale und/oder technische Verknüpfung zu dem ersten Baustein aufweisen. Das automatische Identifizieren kann beispielsweise mit einer entsprechenden Auswahleinrichtung des Automatisierungssystems und/oder des Engineeringsystems, mit dem das Automatisierungssystem erstellt wurde, erfolgen. Schließlich wird der erste Baustein und die jeweiligen Verwendungsstellungen und Schnittstellen des ersten Bausteins geschützt. Zudem werden die Daten des zumindest zweiten Bausteins geschützt. Das automatische Schützen der Bausteine und der Verwendungsstellen bzw. Schnittstellen der Bausteine kann mit einer entsprechenden Schutzeinrichtung des Automatisierungssystems erfolgen. Hierbei ist es ebenso vorgesehen, dass nur Teile der Daten in den Bausteinen geschützt werden.

Hierbei werden diejenigen Daten des zu schützenden Bausteins und der Bausteine, die mit dem zu schützenden Baustein einen Datenaustausch durchführen, geschützt, welche den Datenaustausch zwischen den jeweiligen Bausteinen betreffen. Diese Daten
können einerseits entsprechende Eingabe- und Ausgabeparameter und andererseits Programmaufrufe zu den anderen Bausteinen beinhalten. Durch den Schutz dieser Bereiche der Bausteine kann ein Benutzer des Automatisierungssystems die Bausteine zwar verwenden, er kann aber keine Rückschlüsse auf die interne Struktur und somit auf die technische Funktion der Bausteine ziehen.

In einer weiteren Ausführungsform werden zum Schützen Zugriffsrechte zu dem ersten und zu dem zumindest einen zweiten Baustein eingeschränkt. Hierbei können beispielsweise entsprechende Lese- oder Schreibrechte für die Daten der Bausteine festgelegt werden. Somit können die Daten der Bausteine und die darin enthaltenen Informationen durch einen unbefugten Dritten nicht eingesehen bzw. kopiert oder verändert werden.

Bevorzugt wird eine grafische Darstellung des ersten und/oder zweiten Bausteins oder von Daten der Bausteine unterdrückt oder erfolgt mit gegenüber einer vorgegebenen höchstmöglichen Qualität verminderten Qualität. Bei einer grafischen Darstellung der Bausteine, beispielsweise in einem Editor oder auf einer grafischen Benutzeroberfläche, in dem die entsprechenden Ein- und Ausgabeparameter und die Verknüpfungen zwischen den einzelnen Bausteinen dargestellt sind, kann die grafische Darstellung der zu schützenden Bausteine bzw. die die Verknüpfungs- und Schnittstellen der Bausteine betreffenden Bereiche entsprechend unkenntlich gemacht werden. Eine andere Möglichkeit besteht darin, die Auflösung der grafischen Darstellung der zu schützenden Bereiche entsprechend herabzusetzen.

Die Daten des ersten und/oder des zweiten Bausteins umfassen Daten, welche bevorzugt verschlüsselt werden. Die Daten der Bausteine werden üblicherweise als Textzeichen in einer Programmiersprache dargestellt. Aus dieser Programmstruktur können gegebenenfalls Rückschlüsse auf die technische Funktion des Bausteins geschlossen werden. Aus diesem Grund werden die der technischen Funktion zugrundeliegenden Daten entsprechend verschlüsselt, um sie vor einer Einsichtnahme zu schützen. Zu diesem Zweck kann beispielsweise auch ein entsprechender Passwortschutz vorgesehen sein, mit dem die Verschlüsselung aufgehoben werden kann.

Bevorzugt betreffen die Daten eine textuelle oder grafische Darstellung oder Funktion des jeweiligen Bausteins. Die Funktion betrifft einen Import oder einen Export von Daten des jeweiligen Bausteins. Die entsprechenden Textstellen oder grafischen Elemente, welche die Daten dieser Bausteine enthalten, werden von einer Sicherheitseinrichtung des Automatisierungssystems vor der Ausgabe unkenntlich gemacht. Hierbei kann ebenso berücksichtigt werden, dass beispielsweise durch eine reversible Verschlüsselung ein entsprechendes Rücklesen der Daten möglich ist. Durch das Verfahren wird es ermöglicht, dass ein Baustein so geschützt wird, dass er von Unbefugten oder Außenstehenden in ihren eigenen Bausteinen nicht mehr verwendet werden kann, da die Schnittstellen nicht mehr zugänglich sind.

Schließlich wird erfindungsgemäß bereitgestellt ein Automatisierungssystem mit
- einer Mehrzahl von Bausteinen, wobei das Automatisierungssystem dazu ausgebildet ist, dass ein erster der Bausteine auswählbar ist,
- einer Auswahleinrichtung zum automatischen Bestimmen zumindest eines zweiten Bausteins, der einen Datenaustausch mit dem ersten Baustein durchführt, und
- einer Schutzeinrichtung zum Schützen des ersten und des zumindest einen zweiten Bausteins, sodass nicht alle Daten des ersten Bausteins und des zweiten Bausteins einsehbar sind.

Die im Bezug auf das erfindungsgemäße Verfahren beschriebenen Weiterbildungen lassen sich entsprechend auf das erfindungsgemäße Automatisierungssystem übertragen.

Die vorliegende Erfindung wird nun anhand der beigefügten Zeichnungen näher erläutert, in denen zeigen:
- FIG 1: eine Darstellung eines Projektbaums eines Automatisierungssystems, in dem die einzelnen Bausteine aufgelistet sind; und
- FIG 2: eine grafische Darstellung eines Programmeditors eines Engineeringsystems, in dem die grafische Darstellung eines Bausteins mit verminderter Qualität dargestellt ist.

Die nachfolgend näher geschilderten Ausführungsbeispiele stellen bevorzugte Ausführungsformen der vorliegenden Erfindung dar.

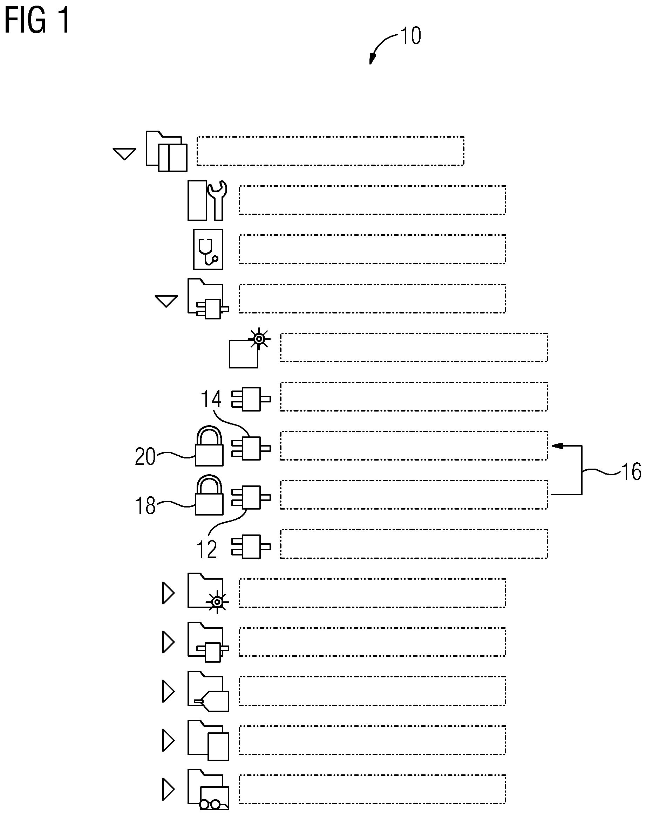

FIG 1 zeigt eine grafische Darstellung des Ausschnitts eines Projektbaums 10 eines Automatisierungssystems mit einer Mehrzahl von Bausteinen. Solche Bausteine können Daten- oder Programmbausteine von Komponenten eines Automatisierungssystems bzw. einer Automatisierungsanlage sein. In dem Projektbaum 10 kann von einem Benutzer ein erster Baustein 12 ausgewählt werden, der vor einer Einsichtnahme geschützt werden soll. Durch eine Auswahleinrichtung des Automatisierungssystems werden alle Bausteine des Automatisierungssystems überprüft, um diejenigen Bausteine zu identifizieren, die einen Datenaustausch mit dem ersten Baustein 12 durchführen.

In dem in FIG 1 dargestellten Beispiel führt ein zweiter Baustein 14 einen Datenaustausch mit dem ersten Baustein 12 durch. Durch den Datenaustausch des ersten Bausteins 12 mit dem zweiten Baustein 14 ist eine technische und/oder funktionale Verknüpfung zwischen den beiden Bausteinen 12 und 14 gegeben. Zwischen dem ersten Baustein 12 und dem zweiten Baustein 14 werden beispielsweise entsprechende Eingabe- und Ausgabeparameter ausgetauscht. Ebenso können entsprechende Verknüpfungen vorhanden sein, welche Funktionsaufrufe bzw. Programmaufrufe der beiden Bausteine 12 und 14 untereinander betreffen. Die vorhandene Verknüpfung zwischen dem ersten Baustein 12 und dem zweiten Baustein 14 ist in FIG 1 schematisch durch den Pfeil 16 dargestellt.

Für den ersten Baustein 12 kann nun ein Schutz vorgesehen werden, der ihn vor einer Einsichtnahme schützt. Ein Benutzer bzw. ein Entwickler des Automatisierungssystems kann hierzu einen Schutz für den Baustein 12 festlegen. Der Schutz des Bausteins 12 ist in FIG 1 grafisch durch ein Verschlüsselungssymbol 18 neben dem Baustein 12 dargestellt. Durch eine entsprechende Schutzeinrichtung des Automatisierungssystems wird nun automatisch auch der Baustein 14 der mit dem Baustein 12 eine Verknüpfung aufweist, geschützt. Dies ist in FIG 1 grafisch durch ein weiteres Verschlüsselungssymbol 20 dargestellt, welches neben dem Baustein 14 dargestellt ist.

Der Schutz des ersten Bausteins 12 und des zweiten Bausteins 14 kann sich hierbei auf alle Daten beziehen, die in dem ersten Baustein 12 und in dem zweiten Baustein 14 enthalten sind. Ebenso ist es vorgesehen, dass lediglich diejenigen Daten in dem ersten Baustein 12 und dem zweiten Baustein 14 geschützt werden, die einen Datenaustausch zwischen dem ersten Baustein 12 und dem zweiten Baustein 14 betreffen. Hierbei ist es zudem vorgesehen, dass alle Daten des Bausteins 12 vor einer Einsichtnahme geschützt werden, während bei dem Baustein 14 lediglich diejenigen Bereiche der Daten geschützt werden, welche einen Datenaustausch mit dem Baustein 12 betreffen. Unter Datenaustausch ist vorliegend das Senden und/oder Empfangen von Ein- bzw. Ausgabeparametern und entsprechende Programmaufrufe des ersten Bausteins 12 und des zweiten Bausteins 14 untereinander zu verstehen.

Ebenso können entsprechende Programmdaten, die die Daten des ersten Bausteins 12 und des zweiten Bausteins 14 beinhalten, verschlüsselt werden. Zu diesem Zweck können bekannte Verschlüsselungsverfahren genutzt werden, die einem unbefugten Dritten eine Einsicht in die Daten der Bausteine 12 und 14 verwehrt. Die Programmdaten repräsentieren Ein- und Ausgabeparameter der Bausteine, Funktionen der Bausteine 12 und 14 und entsprechende Programmaufrufe der Bausteine 12 und 14 untereinander. Ebenso ist es vorgesehen, dass ein entsprechender Passwortschutz vorgesehen ist, der autorisierten Personen einen Zugriff bzw. eine Einsichtnahme auf die Daten der Bausteine 12 und 14 ermöglicht.

Eine andere Möglichkeit besteht darin, entsprechende Zugriffsrechte mit dem ersten Baustein 12 und dem zumindest zweiten Baustein 14 einzuschränken. Die Zugriffsrechte können entsprechende Schreib- und/oder einen Leserechte der Daten der Bausteine 12 und 14 beinhalten. Ebenso kann ein Import und/oder Export der Daten der jeweiligen Bausteine 12 und 14 eingeschränkt werden.

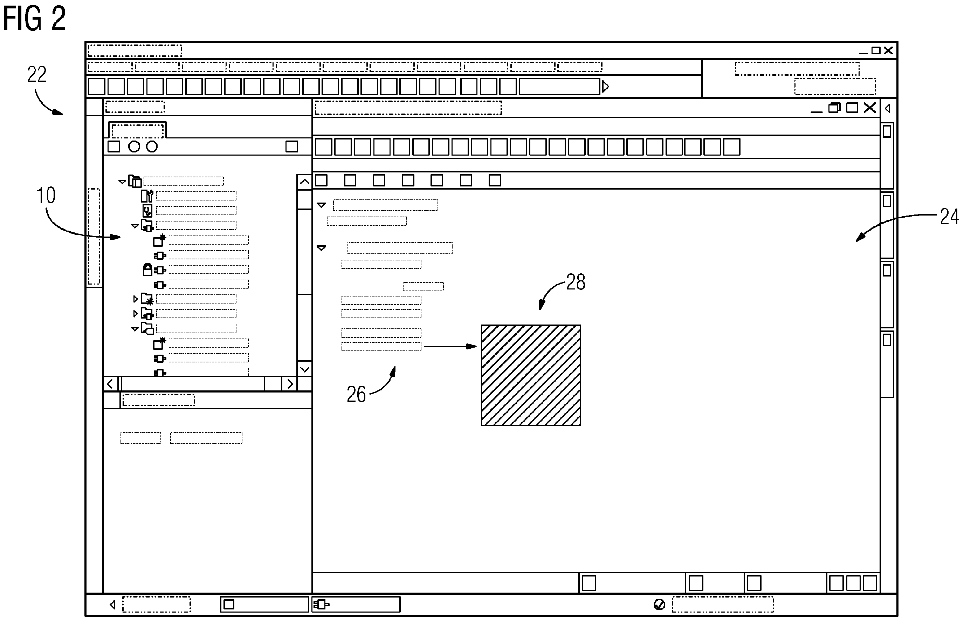

FIG 2 zeigt eine grafische Darstellung eines Programmeditors 22. In dem Programmeditor 22 ist ebenso der Projektbaum 10 gemäß FIG 1 dargestellt. In dem Fenster 24 des Programmeditors 22 ist eine grafische Darstellung 28 des ersten Bausteins 12 und eine grafische Darstellung 26 des zweiten Bausteins 14 dargestellt. Der erste Baustein 12 weist eine Verknüpfung zu dem zweiten Baustein 14 auf. In den grafischen Darstellungen 26 und 28 der Bausteine 12 und 14 sind die entsprechenden Eingangs- bzw. Ausgangsparameter der Bausteine 12 und 14 dargestellt. Ebenso sind die Verknüpfungen zwischen den Bausteinen 12 und 14 grafisch durch entsprechende Linien dargestellt.

In dem vorliegenden Ausführungsbeispiel ist der Baustein 12 mit einem entsprechenden Schutz versehen. Wie zuvor erwähnt wird durch die Auswahleinrichtung des Automatisierungssystems der Baustein 14 automatisch identifiziert, der eine technischen und/oder funktionale Verknüpfung zu dem zweiten Baustein 14 aufweist. Durch die Sicherheitseinrichtung des Automatisierungssystems wird hierbei ebenfalls die grafische Darstellung 26 des Bausteins 14 geschützt.

In dem in FIG 2 dargestellten Ausführungsbeispiel wird nicht der komplette zweite Baustein 14 grafisch unkenntlich gemacht, sondern nur diejenigen Bereiche der grafischen Darstellung 26, die sich auf entsprechende Verknüpfungsstellen des Bausteins 14 beziehen. Ebenso ist es denkbar, dass sowohl die Darstellung 28 des ersten Bausteins 12 und die Darstellung 26 des zweiten Bausteins komplett unterdrückt wird oder mit einer verminderten Qualität dargestellt wird. Auf diese Weise kann ein erweiterter Schutz der jeweiligen Bausteine 12 und 14 erreicht werden, durch den keine Rückschlüsse auf die interne Programmstruktur und die technische Funktion der Bausteine 12 und 14 geschlossen werden können.

### Bezugszeichenliste

- 10: Projektbaum
- 12: Baustein
- 14: Baustein
- 16: Pfeil
- 18: Verschlüsselungssymbol
- 20: Verschlüsselungssymbol
- 22: Programmeditor
- 24: Fenster
- 26: Darstellung
- 28: Darstellung

## Patentansprüche

1. Verfahren zum Schützen einer Mehrzahl von Bausteinen eines Automatisierungssystems vor einer Einsichtnahme von einem Benutzer durch
- Auswählen eines ersten der Bausteine (12),
- Automatisches Bestimmen zumindest eines zweiten Bausteins (14), der einen Datenaustausch mit dem ersten Baustein (12) durchführt mit Hilfe des Engineeringsystems, mit dem das Automatisierungssystem erstellt wurde, und
- Schützen des ersten und des zumindest einen zweiten Bausteins (12,14) mit einer Schutzeinrichtung des Automatisierungssystems, so dass nicht alle Daten des ersten Bausteins (12) und des zweiten Bausteins (14) einsehbar sind, wobei
- alle Daten des ersten Bausteins (12) vor der Einsichtnahme geschützt werden und bei dem zumindest einen zweiten Baustein (14) diejenigen Daten vor einer Einsichtnahme geschützt werden, die einen Datenaustausch mit dem ersten Baustein (12) betreffen, wobei
- die den Datenaustausch mit dem ersten Baustein (12) betreffenden Daten des zweiten Bausteins (14) alle Eingabe- und Ausgabeparameter und Programmaufrufe umfassen.

2. Verfahren nach Anspruch 1,
**dadurch gekennzeichnet, dass**
die Daten des ersten und/oder des zweiten Bausteins (12,14) Programmdaten umfassen und die Programmdaten verschlüsselt werden.

3. Verfahren nach einem der vorhergehenden Ansprüche,
**dadurch gekennzeichnet, dass**
zum Schützen Zugriffsrechte zu dem ersten und zu dem zumindest einen zweiten Baustein (12,14) eingeschränkt werden.

4. Verfahren nach einem der vorhergehenden Ansprüche,
**dadurch gekennzeichnet, dass**
zum Schützen eine graphische Darstellung des ersten und/oder zweiten Bausteins (12,14) oder von Daten der Bausteine (12,14) unterdrückt wird oder mit einer gegenüber einer vorgegebenen höchstmöglichen Qualität verminderten Qualität erfolgt.

5. Verfahren nach einem der vorhergehenden Ansprüche,
**dadurch gekennzeichnet, dass**
die Daten eine textuelle Darstellung oder Funktion des jeweiligen Bausteins (12,14) betreffen.

6. Verfahren nach Anspruch 5,
**dadurch gekennzeichnet, dass**
die Funktion einen Import und/oder Export vom Daten des jeweiligen Bausteins (12,14) betrifft.

7. Automatisierungssystem mit
- einer Mehrzahl von Bausteinen, wobei das Automatisierungssystem dazu ausgebildet ist, dass ein erster der Bausteine (12) auswählbar ist,
- einer Auswahleinrichtung zum automatischen Bestimmen mit Hilfe des Engineeringsystems, mit dem das Automatisierungssystem erstellt wurde, zumindest eines zweiten Bausteins (14), der einen Datenaustausch mit dem ersten Baustein (12) durchführt, und
- einer Schutzeinrichtung zum Schützen des ersten und des zumindest einen zweiten Bausteins (12,14), so dass nicht alle Daten des ersten Bausteins (12) und des zweiten Bausteins (14) von einem Benutzer einsehbar sind,
**dadurch gekennzeichnet, dass**
- die Schutzeinrichtung dazu ausgebildet ist, alle Daten des ersten Bausteins (12) vor der Einsichtnahme zu schützen und bei dem zumindest einen zweiten Baustein (14) diejenigen Daten vor einer Einsichtnahme zu schützen, die einen Datenaustausch mit dem ersten Baustein (12) betreffen, wobei
- die den Datenaustausch mit dem ersten Baustein (12) betreffenden Daten des zweiten Bausteins (14) alle Eingabe- und Ausgabeparameter und Programmaufrufe umfassen

## Claims

1. Method for protecting a plurality of modules in an automation system against inspection by a user by
- selecting a first of the modules (12),
- automatically determining at least one second module (14), which performs data interchange with the first module (12), with the aid of the engineering system with which the automation system was set up, and
- protecting the first and the at least one second module (12, 14) using a protection device in the automation system, as a result of which not all the data from the first module (12) and from the second module (14) can be inspected, wherein
- all the data of the first module (12) are protected against inspection and in the case of the at least one second module (14) those data that relate to a data interchange with the first module (12) are protected against inspection, wherein
- the data of the second module (14) that relate to the data interchange with the first module (12) comprise all the input and output parameters and program calls.

2. Method according to Claim 1,
**characterized in that**
the data from the first and/or the second module (12, 14) comprise program data, and the program data are encrypted.

3. Method according to one of the preceding claims,
**characterized in that**
the protection involves access rights to the first and to the at least one second module (12, 14) being restricted.

4. Method according to one of the preceding claims,
**characterized in that**
the protection involves a graphical representation of the first and/or the second module (12, 14) or of data from the modules (12, 14) being suppressed or taking place with a reduced quality in comparison with a prescribed highest possible quality.

5. Method according to one of the preceding claims,
**characterized in that**
the data relates to a textual representation or function of the respective module (12, 14).

6. Method according to Claim 5,
**characterized in that**
the function relates to import and/or export of data from the respective module (12, 14).

7. Automation system having
- a plurality of modules, wherein the automation system is designed such that a first of the modules (12) can be selected,
- a selection device for automatically determining, with the aid of the engineering system with which the automation system was set up, at least one second module (14), which performs data interchange with the first module (12), and
- a protection device for protecting the first and the at least one second module (12, 14), with the result that not all the data from the first module (12) and the second module (14) can be inspected by a user,
**characterized in that**
- the protection device is configured to protect all the data of the first module (12) against inspection and in the case of the at least one second module (14) to protect those data that relate to a data interchange with the first module (12) against inspection, wherein
- the data of the second module (14) that relate to the data interchange with the first module (12) comprise all the input and output parameters and program calls.

## Revendications

1. Procédé pour protéger une pluralité de composants de base d'un système d'automatisation contre une consultation par un utilisateur, comprenant les étapes suivantes :
- sélection d'un premier des composants de base (12),
- détermination automatique d'au moins un second composant de base (14) qui exécute un échange de données avec le premier composant de base (12) à l'aide du système d'ingénierie avec lequel le système d'automatisation a été créé, et
- protection du premier et du au moins un second composant de base (12, 14) avec un dispositif de protection du système d'automatisation de manière à ce que toutes les données du premier composant de base (12) et du second composant de base (14) ne soient pas visibles,
dans lequel
- toutes les données du premier composant de base (12) sont protégées contre une consultation et les données du au moins un second composant de base (14) qui concernent un échange de données avec le premier composant de base (12) sont protégées contre une consultation,
- les données du second composant de base (14) concernées par l'échange de données avec le premier composant de base (12) comprennent tous les paramètres d'entrée et de sortie et les appels de programme.

2. Procédé selon la revendication 1,
**caractérisé en ce que** les données du premier et/ou du second composant de base (12, 14) comprennent des données de programme et les données de programme sont cryptées.

3. Procédé selon l'une quelconque des revendications précédentes,
**caractérisé en ce qu'**à titre de protection, des droits d'accès au premier et/ou à au moins un second composant de base (12, 14) sont limités.

4. Procédé selon l'une quelconque des revendications précédentes,
**caractérisé en ce qu'**à titre de protection, une représentation graphique du premier et/ou du second composant de base (12, 14) ou des données des composants de base (12, 14) est supprimée ou s'effectue avec une qualité réduite par rapport à une qualité maximale prédéterminée.

5. Procédé selon l'une quelconque des revendications précédentes,
**caractérisé en ce que** les données concernent une représentation textuelle ou une fonction du composant de base respectif (12, 14).

6. Procédé selon la revendication 5,
**caractérisé en ce que** la fonction concerne une importation et/ou une exportation des données du composant de base respectif (12, 14).

7. Système d'automatisation comprenant
- une pluralité de composants de base, le système d'automatisation étant conçu de manière à ce qu'un premier des composants de base (12) soit sélectionnable,
- un dispositif de sélection permettant de déterminer automatiquement, à l'aide du système d'ingénierie avec lequel le système d'automatisation a été créé, au moins un second composant de base (14) qui exécute un échange de données avec le premier composant de base (12), et
- un dispositif de protection pour protéger le premier et le au moins un second composant de base (12, 14) de manière à ce que toutes les données du premier composant de base (12) et du second composant de base (14) ne soient pas visibles par un utilisateur,
**caractérisé en ce que**
- le dispositif de protection est conçu de manière à protéger toutes les données du premier composant de base (12) contre une consultation et pour protéger contre une consultation les données du au moins un second composant de base (14) concernées par un échange de données avec le premier composant de base (12), dans lequel
- les données du second composant de base (14) concernées par l'échange de données avec le premier composant de base (12) comprennent tous les paramètres d'entrée et de sortie et les appels de programme.
